# DEMANDE DE BREVET EUROPEEN

(11) **EP 1 911 575 A1**
(43) Date de publication de la demande: **16.04.2008**
(21) Numéro de dépôt: 07291040.9
(22) Date de dépôt: 24.08.2007
(51) Int. Cl.: B32B 1/08, B32B 27/34, F16L 11/04

(54) **Canalisation hydraulique comportant une couche en polyphtalamide et une couche en matériau thermoplastique**

(30) Priorité: 10.10.2006 FR 0608855
(71) Demandeur: Nobel Plastiques, 78300 Poissy (FR)
(72) Inventeur: Cheng, Cyrielle, 85160 Saint-Jean de Monts (FR)
(74) Mandataire: Lavialle, Bruno François Stéphane

(57) **Abrégé**

Canalisation hydraulique comportant une couche interne en polyphtalamide et une couche externe en matériau thermoplastique, la canalisation ayant une épaisseur principalement formée par une épaisseur de la couche interne.

## Description

La présente invention concerne une canalisation hydraulique utilisable par exemple dans un moteur thermique pour transporter un liquide de refroidissement de l'huile de transmission.

### ARRIERE PLAN DE L'INVENTION

Il existe de nombreuses structures de canalisations utilisables pour transporter un liquide sous pression dans les conditions d'utilisation propres à un véhicule automobile. Compte tenu de la sévérité de ces conditions, tant en termes de résistances mécanique, chimique, physique ou thermique, aucune structure ne s'est avérée totalement satisfaisante et ce d'autant plus qu'à ces sévères conditions d'utilisation viennent se greffer des exigences de coût et de fabricabilité. La recherche d'une solution représentant un compromis idéal a pourtant touché de nombreux matériaux allant des métaux jusqu'aux élastomères en passant par les thermoplastiques.

A titre d'exemple de ces contraintes, le fonctionnement des boîtes de vitesses automatiques des véhicules automobiles entraîne un échauffement du fluide de transmission qui peut détériorer la boîte de vitesses automatique. Il est donc généralement prévu un refroidisseur équipant le circuit hydraulique associé à la boîte de vitesses automatique. La boîte de vitesses et le refroidisseur sont reliés par une canalisation qui doit résister à des températures comprises entre -40°C et 150°C, des pressions allant de 10 à 40 bars, des produits chimiques avec lesquels la canalisation peut être en contact occasionnel (huiles, solutions salines, liquides de protection moteur, acides de batterie...) et des efforts mécaniques (débattements, chocs, vibrations entre autres). Les canalisations actuellement utilisées pour le transport du liquide de refroidissement de l'huile de transmission sont des canalisations métalliques ou des canalisations en caoutchouc associées à une tresse métallique. Ces canalisations sont cependant relativement chères, sensibles à la corrosion, peu flexibles et lourdes. On a pour ces raisons, envisagé d'utiliser des canalisations en matériau thermoplastique et plus particulièrement en polyamide-12 mais celui-ci ne résiste pas à des températures au-delà de 120°C. En outre, ces canalisations sont sensibles à l'humidité qui pourrait en diminuer les performances.

### OBJET DE L'INVENTION

Par l'invention, on entend proposer une alternative aux structures existantes apportant une réponse satisfaisante aux différentes contraintes liées à son utilisation notamment sur un véhicule automobile.

### RESUME DE L'INVENTION

A cet effet, on prévoit, selon l'invention, une canalisation hydraulique comportant une couche en polyphtalamide et au moins une couche en un autre matériau thermoplastique, la canalisation ayant une épaisseur principalement formée par une épaisseur de la couche en polyphtalamide.

Ainsi, la canalisation a une épaisseur principalement ou majoritairement formée par l'épaisseur de la couche en polyphtalamide qui va assurer l'essentiel de la faible perméabilité de la canalisation et de la résistance de la canalisation aux sollicitations mécaniques, aux agressions chimiques, et aux contraintes physiques et thermiques. L'autre matériau thermoplastique est choisi pour assurer la protection du polyphtalamide et/ou pour en améliorer les performances. Une telle canalisation peut alors être faiblement perméable, flexible, légère, insensible à la corrosion, résistante à la fatigue. Par ailleurs, le polyphtalamide a une propension à être plastiquement déformable à froid et dispose d'un faible allongement mécanique. Le matériau thermoplastique est alors choisi pour améliorer l'allongement mécanique et pour apporter à la canalisation sa rigidité et son élasticité pour en faire une canalisation relativement souple et élastiquement déformable.

De préférence, la couche de polyphtalamide est la couche la plus à l'intérieur du tube.

Il est intéressant que le polyphtalamide soit en contact avec le fluide transporté compte tenu de sa résistance aux agressions chimiques.

Selon un mode de réalisation particulier, l'épaisseur de la couche en polyphtalamide est cinq à dix fois supérieure à l'épaisseur de la couche en matériau thermoplastique et, de préférence, l'épaisseur de la couche en polyphtalamide est de l'ordre de 1 à 1,5 mm et l'épaisseur de la couche en matériau thermoplastique est de l'ordre de 0,2 mm.

Ce rapport d'épaisseur est la solution optimale pour réaliser la canalisation conforme à l'invention.

Selon une caractéristique intéressante, la couche en matériau thermoplastique est en un polymère fluoré et, de préférence, le polymère fluoré est un terpolymère de tétrafluoroéthylène, d'hexafluoropropylène et de vinylidène fluoré.

La couche en polymère fluoré assure ainsi une bonne protection de la canalisation contre les agressions externes sans entraver la flexibilité de ladite canalisation. Le polymère fluoré présente en outre l'avantage d'être hydrophobe de sorte qu'il empêche une contamination du fluide transporté par de l'eau. Le polymère fluoré présente en outre une excellente tenue thermique jusqu'à une température voisine de 165°C.

En variante, la couche en matériau thermoplastique est en un thermoplastique élastomère.

La couche en thermoplastique élastomère assure aussi une bonne protection de la canalisation contre les agressions externes sans entraver la flexibilité de ladite canalisation.

D'autres caractéristiques et avantages de l'invention ressortiront à la lecture de la description qui suit, de modes de réalisation particuliers non limitatifs de l'invention.

### DESCRIPTION DETAILLEE DE L'INVENTION

La canalisation conforme à l'invention comprend une couche interne réalisée en polyphtalamide (PPA) ayant une épaisseur comprise entre 1 et 1,5 mm.

La canalisation comprend en outre une couche externe réalisée en un fluoropolymère et de préférence en un terpolymère de tétrafluoroéthylène, d'hexafluoropropylène et de vinylidène fluoré (THV). D'autres polymères fluorés sont utilisables, tels que : le polyvinylidène fluoré (PVDF), l'éthylène tétrafluoroéthylène (ETFE), l'éthylène fluoroéthylène perfluorure (EFEP), le polytétrafluoroéthylène (PTFE), le fluoroéthylène propylène (FEP), le perfluoroalkoxy (PFA), l'éthylène chlorotrifluoroéthylène (ECTFE).... La couche externe a une épaisseur d'environ 0,2 mm.

L'épaisseur de la canalisation est ainsi formée majoritairement par l'épaisseur de la couche en polyphtalamide.

La canalisation conforme à l'invention est réalisée par extrusion et la couche externe est en contact direct avec la couche interne. Ceci est rendu possible par les bonnes propriétés d'adhésion mutuelle du polyphtalamide et du terpolymère fluoré.

En variante, lorsque ces propriétés d'adhésion ne sont pas suffisantes au regard des conditions d'utilisation de la conduite, il est possible d'ajouter une couche de liaison entre la couche interne et la couche externe.

En variante encore, il est possible d'utiliser pour la réalisation de la couche externe, un thermoplastique élastomère (TPE) présentant des propriétés similaires au fluoropolymère en termes de température et de pression mais étant plus souple que celui-ci.

Bien entendu, l'invention n'est pas limitée au mode de réalisation décrit et on peut y apporter des variantes de réalisation sans sortir du cadre de l'invention tel que défini par les revendications.

La canalisation peut comprendre plus de deux couches et l'ordre des couches peut être modifié.

Les matériaux utilisés peuvent comprendre des charges, additifs ou adjuvants pour par exemple les rendre compatibles entre eux (amélioration de leur propriété adhésive) ou conducteurs, les renforcer mécaniquement ou les colorer...

## Revendications

1. Canalisation hydraulique comportant une couche majoritairement en polyphtalamide et au moins une couche en un autre matériau thermoplastique, la canalisation ayant une épaisseur principalement formée par une épaisseur de la couche en polyphtalamide.

2. Canalisation selon la revendication 1, dans laquelle l'épaisseur de la couche en polyphtalamide est cinq à dix fois supérieure à l'épaisseur de la couche en matériau thermoplastique.

3. Canalisation selon la revendication 2, dans laquelle l'épaisseur de la couche en polyphtalamide est de l'ordre de 1 à 1,5 mm et l'épaisseur de la couche en matériau thermoplastique est de l'ordre de 0,2 mm.

4. Canalisation selon la revendication 1, dans laquelle la couche externe en matériau thermoplastique est en un thermoplastique élastomère.

5. Canalisation selon la revendication 1, dans laquelle la couche externe en matériau thermoplastique est en un polymère fluoré.

6. Canalisation selon la revendication 5, dans laquelle le polymère fluoré est un terpolymère de tétrafluoroéthylène, d'hexafluoropropylène et de vinylidène fluoré.

7. Canalisation selon la revendication 1, dans laquelle la couche en matériau thermoplastique est directement en contact avec la couche en polyphtalamide.

8. Canalisation selon la revendication 2, dans laquelle la couche de polyphtalamide est la couche la plus à l'intérieur du tube.
